# EUROPÄISCHE PATENTSCHRIFT

(11) **EP 2 078 143 B1**
(45) Veröffentlichungstag und Bekanntmachung des Hinweises auf die Patenterteilung: **20.01.2010**
(21) Anmeldenummer: 07802354.6
(22) Anmeldetag: 18.09.2007
(51) Int. Cl.: F01N 11/00

(54) **ABGASREINIGUNGSANLAGE FÜR EINE BRENNKRAFTMASCHINE**
EXHAUST GAS PURIFICATION SYSTEM FOR AN INTERNAL COMBUSTION ENGINE
INSTALLATION D'ÉPURATION DES GAZ D'ÉCHAPPEMENT D'UN MOTEUR À COMBUSTION INTERNE

(30) Priorität: 11.10.2006 DE 102006048045
(43) Veröffentlichungstag der Anmeldung: 15.07.2009
(73) Patentinhaber: Daimler AG, 70327 Stuttgart (DE)
(72) Erfinder: BUSCH, Michael-Rainer, 73061 Ebersbach (DE)
(74) Vertreter: JENSEN & SON
(86) Internationale Anmeldenummer: PCT/EP2007/008108
(87) Internationale Veröffentlichungsnummer: WO 2008/043422

(56) Entgegenhaltungen:
- EP-A- 1 515 018
- DE-A1- 19 923 781

## Beschreibung

Die Erfindung betrifft eine Abgasreinigungsanlage für eine Brennkraftmaschine eines Kraftfahrzeugs mit den Merkmalen des Oberbegriffs des Anspruchs 1.

Aus der DE 199 23 781 A1 ist eine Abgasreinigungsanlage umfassend ein erstes Partikelfilterelement und ein diesem nachgeschaltetes zweites Partikelfilterelement bekannt. Dabei weist das zweite Partikelfilterelement eine gegenüber dem ersten Partikelfilterelement verringerte Transmission von Rußteilchen auf. Den Partikelfilterelementen ist jeweils entweder ein Oxidationskatalysator zur Oxidation von Stickstoffmonoxid (NO) zu Stickstoffdioxid (NO₂) zugeordnet oder sie sind jeweils mit einer dahingehend wirksamen oxidationskatalytischen Beschichtung versehen. Infolge dieser Ausführungsform wird jedem Partikelfilterelement ausreichend NO₂ zur Niedertemperaturoxidation von abgelagertem Ruß zur Verfügung gestellt.

Aufgabe der vorliegenden Erfindung ist es, eine Abgasreinigungsanlage für Brennkraftmaschinenabgas zur Verfügung zu stellen, deren Wirksamkeit zur Entfernung von Partikeln zuverlässig überwacht werden kann.

Diese Aufgabe wird durch eine Abgasreinigungsanlage mit den Merkmalen des Anspruch 1 gelöst.

Erfindungsgemäß sind für die Abgasreinigungsanlage der überwiegend mit Luftüberschuss betriebenen Brennkraftmaschine Beladungserfassungsmittel vorgesehen, welche eine mit einer Partikelbeladung des zweiten Partikelfilterelements korrelierende Größe bereitstellen. Ferner ist eine der Abgasreinigungsanlage zugeordnete Auswerteeinheit vorgesehen, welche die von den Beladungserfassungsmitteln bereitgestellte Größe in Bezug auf eine Abscheidewirkung des ersten Partikelfilterelements auswertet.

Das erste Partikelfilterelement weist vorzugsweise einen hohen Partikel-Abscheidegrad von typischerweise mehr als 99 % auf, so dass stromab des intakten ersten Partikelfilterelements das Abgas einen sehr niedrigen Partikelgehalt aufweist. Bei einer Funktionsstörung des ersten Partikelfilterelements, beispielsweise infolge eines Defekts durch Rissbildung, vermindert sich dessen Filterwirkung und das aus dem ersten Partikelfilterelement ausströmende Abgas enthält vermehrt Partikel, welche jedoch vom nachgeschalteten zweiten Partikelfilterelement ausgefiltert werden. Dadurch belädt sich das zweite Partikelfilterelement verstärkt mit Partikeln, was mit Hilfe der erfindungsgemäß vorgesehenen Beladungserfassungsmittel durch Bereitstellen einer mit der Partikelbeladung des zweiten Partikelfilterelements korrelierenden Größe erfasst werden kann. Durch Auswertung der bereitgestellten Größe durch die Auswerteeinheit kann die Abscheidewirkung des ersten Partikelfilterelements ermittelt bzw. abgeschätzt werden und dadurch eine Funktionsüberprüfung bzw. Überwachung des ersten Partikelfilterelements erfolgen. Wird beispielsweise durch die Beladungserfassungsmittel ein langsamer Anstieg bzw. ein geringes Ausmaß der Partikelbeladung des zweiten Partikelfilterelements festgestellt, so wird das erste Partikelfilterelement als in Ordnung befunden und nicht beanstandet. Erfolgt hingegen die Beladungszunahme des zweiten Partikelfilterelements rascher als durch einen bestimmten Vergleichswert vorgegeben oder überschreitet die Partikelbeladung des zweiten Partikelfilterelements einen vorgebbaren Schwellenwert, so wird dies als Funktionsstörung des ersten Partikelfilterelements gewertet und vorzugsweise eine entsprechende Meldung ausgegeben. Vorzugsweise ist der Schwellenwert vorgebbar, beispielsweise in Abhängigkeit einer Gesamtbetriebszeit oder einer Betriebszeit seit der letzten erfolgreichen thermischen Regeneration des ersten oder des zweiten Partikelfilterelements.

In Ausgestaltung der Erfindung ist das zweite Partikelfilterelement derart in der Abgasreinigungsanlage angeordnet, dass die bei einer thermischen Regeneration des ersten Partikelfilterelements auf das zweite Partikelfilterelement übertragene Wärmemenge ausreicht, um das zweite Partikelfilterelement auf eine für einen Abbrand von abgelagertem Ruß erforderliche Temperatur aufzuheizen. Unter einer thermischen Regeneration wird in diesem Zusammenhang eine Regeneration infolge eines sauerstoffinduzierten Rußabbrands verstanden. Je nach Rußbeschaffenheit erfolgt diese bei Temperaturen von etwa 600 °C, wobei durch katalytisch wirkende Additive oder Beschichtungen eine Verminderung auf 500 °C und weniger erzielt werden kann.

Eine Wärmeübertragung vom ersten Partikelfilterelement auf das zweite Partikelfilterelement erfolgt dabei hauptsächlich konvektiv durch das Abgas, welches sich auf seinem Weg zum ersten Partikelfilterelement und/oder durch das erste Partikelfilterelement hindurch aufgeheizt hat oder bereits von vornherein eine hohe Temperatur aufweist. Eine während einer thermischen Regeneration des ersten Partikelfilterelements erfolgende zusätzliche Aufheizung infolge einer Wärmefreisetzung beim Rußabbrand kann dabei ebenfalls ausgenützt werden. Das in das zweite Partikelfilterelement eintretende Abgas kann dabei das zweite Partikelfilterelement auf oder über eine Rußabbrandtemperatur aufheizen, so dass dieses durch sauerstoffinduzierten Rußabbrand regeneriert wird. Zur Erzielung einer vorzugsweise angestrebten guten Wärmeübertragung ist es dabei vorteilhaft, wenn das zweite Partikelfilterelement nahe oder unmittelbar hinter dem ersten Partikelfilterelement angeordnet ist. Besonders vorteilhaft ist eine Anordnung in demselben Gehäuse. Auf diese Weise kann neben einer konvektiven Wärmeübertragung auch eine Wärmeübertragung durch Strahlung erfolgen.

Durch die erfindungsgemäße Ausführungsform kann insbesondere bei einem hinsichtlich des Abscheidegrads geringfügig verschlechterten ersten Partikelfilterelement das zweite Partikelfilterelement den Verlust an Filterwirkung ausgleichen. Dadurch wird auch bei einem in gewissem Ausmaß geschädigten ersten Partikelfilterelement insgesamt dennoch eine hohe Partikelverminderung erzielt.

In weiterer Ausgestaltung der Erfindung beträgt die Partikelaufnahmefähigkeit des ersten Partikelfilterelements ein Mehrfaches der Partikelaufnahmefähigkeit des zweiten Partikelfilterelements. Die gegenüber dem ersten Partikelfilterelement verringerte Partikelaufnahmefähigkeit des zweiten Partikelfilterelements wird vorzugsweise realisiert, indem dieses im Vergleich zum ersten Partikelfilterelement klein ausgeführt ist. Vorzugsweise weist das zweite Partikelfilterelement bei ansonsten gleicher Ausführung weniger als etwa 50 % insbesondere weniger als 30 % des Volumens des ersten Partikelfilterelements auf. Bei einer vergleichsweise geringen Abnahme des Abscheidegrades des ersten Partikelfilterelement ist die Belastung des zweiten Partikelfilterelements immer noch relativ gering, so dass dessen Reinigungswirkung für eine insgesamt niedrige Partikelemission ausreicht, zumal im zweiten Partikelfilterelement abgelagerte Rußpartikel von Zeit zu Zeit bzw. je nach Bedarf im Zusammenhang einer thermischen Regeneration des ersten Partikelfilterelements mit abgebrannt werden. Bei dieser Regeneration wird auch das zweite Partikelfilterelement regeneriert und kann erneut Partikel ausfiltern. Eine geringere Partikelaufnahmefähigkeit des zweiten Partikelfilterelements kann jedoch auch durch eine geringere Porosität erreicht werden. Vorzugsweise sind die Partikelfilterelemente jedoch diesbezüglich gleich ausgeführt, wobei eine Ausführung als wanddurchströmtes Partikelfilter bevorzugt ist. Eine Ausführung als Oberflächenfilter, beispielsweise in Form eines Sintermetallfilters oder eine Ausführung als Tiefenfilter, beispielsweise in Form einer Schaumkeramik ist jedoch ebenfalls möglich.

In weiterer Ausgestaltung der Erfindung sind das erste und das zweite Partikelfilterelement derart ausgelegt, dass eine Aufnahme einer bestimmten Partikelmenge beim zweiten Partikelfilterelement eine im Vergleich zum ersten Partikelfilterelement signifikant erhöhte Zunahme des Strömungswiderstands verursacht. Infolge dieser Ausgestaltung ist eine besonders empfindliche Funktionsüberprüfung des ersten Partikelfilterelements ermöglicht, da bereits eine geringe Partikelbeladung von beispielsweise 1 g/l oder weniger eine signifikante Erhöhung des Strömungswiderstands verursacht, wohingegen eine gleich große Partikelbeladung beim ersten Partikelfilterelement ein geringe oder vernachlässigbare Erhöhung des Strömungswiderstands bewirkt. Folglich kann durch die Beiadungserfassungsmittel rasch eine Funktionsstörung bzw. ein verminderter Abscheidegrad des ersten Partikelfilterelements festgestellt werden.

In weiterer Ausgestaltung der Erfindung umfassen die Beladungserfassungsmittel Staudruckerfassungsmittel oder Strömungswiderstandserfassungsmittel. Dies stellt eine besonders robuste und gleichzeitig preisgünstige Ausführungsform zur Erfassung der Filterbeladung dar. Besonders bevorzugt ist eine Ausführung in Form eines Differenzdrucksensors, womit eine zuverlässige Bestimmung eines mit der Beladung korrelierenden Staudrucks bzw. Strömungswiderstands ermöglicht ist.

In weiterer Ausgestaltung der Erfindung umfassen die Beladungserfassungsmittel Temperaturerfassungsmittel. Da beim Rußabbrand während einer thermischen Regeneration eine mit der Menge des abgelagerten bzw. abgebrannten Rußes korrelierende Wärmemenge freigesetzt wird, kann eine dadurch bewirkte Temperaturerhöhung des Abgases oder des Partikelfilterelements hinsichtlich der abgelagerten bzw. abgebrannten Rußmenge ausgewertet werden. Überschreitet die Temperaturerhöhung einen vorgegebenen Wert, so deutet dies auf eine vermehrte Partikelbelastung des zweiten Partikelfilterelements und somit auf ein schadhaftes erstes Partikelfilterelement hin.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild einer Brennkraftmaschine mit einer ersten vorteilhaften Ausführungsform der erfindungsgemäßen Abgasreinigungsanlage,
- Fig. 2: ein schematisches Blockbild einer Brennkraftmaschine mit einer zweiten vorteilhaften Ausführungsform der erfindungsgemäßen Abgasreinigungsanlage und
- Fig. 3: ein Zeitdiagramm mit einem schematisch dargestellten beispielhaften Verlauf für eine Partikelbeladung eines Partikelfilterelements.

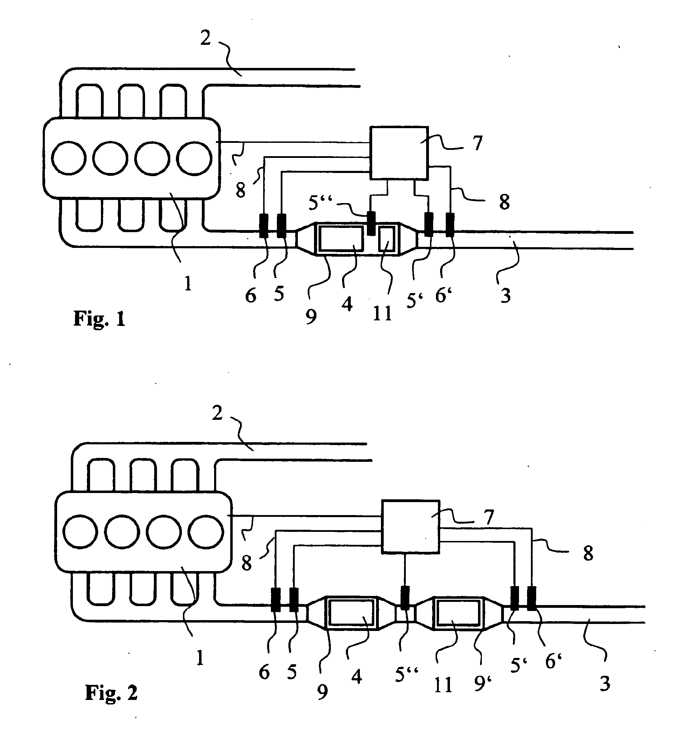

In Fig. 1 ist eine vorzugsweise als Dieselmotor ausgebildete Brennkraftmaschine 1 eines Kraftfahrzeugs skizziert, welche ihre Verbrennungsluft über eine Ansaugluftleitung 2 erhält, und deren Verbrennungsabgase über einen Abgasstrang 3 einem in einem Gehäuse 9 angeordneten ersten Partikelfilterelement 4 zur Ausfilterung von partikelförmigen Bestandteilen zugeführt werden. Die von Partikeln gereinigten Abgase werden über einem stromab angeordneten nicht dargestellten Endschalldämpfer 10 an die Umgebung abgegeben.

Stromab des ersten Partikelfilterelements 4 ist ein zweites Partikelfilterelement 11 im Abgasstrang 3 angeordnet, welches analog zum ersten Partikelfilterelement 4 ebenfalls partikelförmige Bestandteile aus dem Abgas ausfiltern kann. Während das erste Partikelfilterelement 4 vorzugsweise dafür vorgesehen ist, den Großteil der Filterwirkung aufzubringen, dient das zweite Partikelfilterelement 11 überwiegend der Überwachung bzw. der Funktionsfähigkeit des stromaufwärts angeordneten ersten Partikelfilterelements 4. Nachfolgend wird daher das erste Partikelfilterelement 4 als Systemfilter und das zweite Partikelfilterelement 11 als Diagnosefilter bezeichnet. Auf die Funktion des Diagnosefilters 11 und das Zusammenwirken von Systemfilter 4 und Diagnosefilter 11 wird weiter unten näher eingegangen.

In der in Fig. 1 dargestellten vorteilhaften Variante ist das Diagnosefilter 11 zusammen mit dem Systemfilter 4 zusammen in dem für beide Filter 4, 11 gemeinsamen Gehäuse 9 angeordnet.

Für die Abgasreinigungsanlage der Brennkraftmaschine 1 ist eine Abgassensorik zur Erfassung wesentlicher Abgaszustandsgrößen wie Druck, Temperatur, Sauerstoffgehalt und gegebenenfalls weiterer Größen vorgesehen. In dem in Fig. 1 dargestellten Beispiel sind eingangsseitig des Systemfilters 4 ein erster Drucksensor 5 sowie ein erster Temperatursensor 6 und ausgangsseitig des Diagnosefilters 11 ein zweiter Drucksensor 5' sowie ein zweiter Temperatursensor 6' im Abgasstrang 3 angeordnet. Ein dritter Drucksensor 5" ist im Gehäuse 9 derart zwischen dem Systemfilter 4 und dem Diagnosefilter 11 angeordnet, dass er den zwischen diesen beiden Partikelfilterelementen 4, 11 vorhandenen Druck erfassen kann. Mittels der Drucksensoren 5, 5" bzw. 5'' und 5' kann ferner ein über dem jeweiligen Partikelfilterelement 4 bzw. 11 wirksamer Differenzdruck erfasst werden. Weitere Sensor- und Abgasreinigungskomponenten wie beispielsweise Lambdasensoren, ins Innere des Systemfilters 4 bzw. des Diagnosefilters 11 geführte Temperatursensoren, vor und nach den Partikelfilterelementen 4, 11 angeordnete katalytische Abgasreinigungskomponenten können ebenfalls vorgesehen sein, sind jedoch der Übersichtlichkeit halber nicht dargestellt. Insbesondere kann stromauf des Systemfilters 4 ein Oxidationskatalysator zur Oxidation von Kohlenwasserstoffen, Kohlenmonoxid oder Stickstoffmonoxid vorgesehen sein. Der Oxidationskatalysator kann dabei durch Nachverbrennung von dem Abgas zugeführten brennbaren Bestandteilen zur Abgastemperaturerhöhung bei einer thermischen Partikelfilterregeneration dienen oder für eine Niedertemperaturregeneration NO₂ durch Oxidation von NO bereitstellen. Ebenfalls vorteilhaft ist ein stromab des Diagnosefilters 11 angeordneter Stickoxidreinigungskatalysator.

Zur Steuerung des Betriebs von Brennkraftmaschine 1 und Abgasreinigungsanlage ist ein elektronisches Steuergerät 7 vorgesehen. Das Steuergerät 7 erhält einerseits Informationen über maßgebliche Zustandsgrößen der Brennkraftmaschine 1 und der Abgasreinigungsanlage wie z.B. Drehzahl, Temperaturen, Drücke von entsprechenden Sensoren bzw. Fühlern und kann andererseits Steuersignale als Einstellgrößen an Aktuatoren wie z.B. ein AGR-Ventil oder einen Abgasturbolader (nicht dargestellt) ausgeben. Weiter ist das Steuergerät 7 in der Lage, eine Einspritzung von Kraftstoff bedarfsgerecht einzustellen. Hierfür kann das Steuergerät 7 auf abgespeicherte Kennfelder oder Berechnungsroutinen zurückgreifen. Zur Durchführung dieser Funktionen ist das Steuergerät 7 über Datenleitungen 8 mit den jeweiligen Komponenten verbunden, wobei die Datenleitungen 8 in Form von unidirektionalen oder bidirektionalen Signal- bzw. Steuerleitungen vorliegen können.

Bei normalem Betrieb der Brennkraftmaschine 1 erfolgt eine Reinigung der Abgase durch Ausfilterung von Rußpartikeln vorzugsweise überwiegend durch das Systemfilter 4. Vorzugsweise weist das Systemfilter 4 einen hohen Abscheidegrad von über 95 %, insbesondere von über 99 % und besonders bevorzugt von mehr als 99,5 % bezogen auf die Partikelmasse auf. Vorzugsweise ist das Systemfilter 4 derart ausgelegt, dass der Partikelgehalt des Abgases auf weniger als 10 mg, besonders bevorzugt auf weniger als 5 mg und insbesondere auf weniger als 2 mg je km Fahrstrecke oder je kWh Motorarbeit vermindert werden kann. Das Systemfilter 4 ist hierfür vorzugsweise als wanddurchströmter Partikelfilter in Wabenkörperbauform ausgeführt mit an den Enden wechselseitig verschlossenen Kanälen, so dass in das Systemfilter 4 einströmendes Abgas durch die Kanalwände gezwungen wird. Bevorzugt ist das Systemfilter aus SiC, Kordierit oder Aluminiumtitanat aufgebaut. Eine Ausführung als Sintermetallfilter oder als Tiefenfilter, beispielsweise in Form eines Metall- oder Keramikschaums sind jedoch ebenfalls möglich. Schließlich ist auch eine Ausführung als elektrostatischer Partikelabscheider oder als Zyklonabscheider möglich.

Infolge der Ausfilterung von überwiegend in Form von Ruß vorliegenden Partikeln tritt im Allgemeinen eine allmählich zunehmende Rußbeladung des Systemfilters 4 ein, so dass dieser in zunehmenden Maß verstopft und sein Strömungswiderstand ansteigt. Um den dadurch verursachten unerwünschten Abgasgegendruck wieder abzusenken, sind von Zeit zu Zeit Partikelfilterregenerationen durch thermischen, sauerstoffinduzierten Rußabbrand erforderlich. Die zeitlichen Abstände, in welchen diese thermischen Regenerationen erforderlich werden, hängen dabei maßgeblich von der Partikelbelastung des Abgases und von der Partikel-Aufnahmekapazität des Systemfilters 4 ab. Typischerweise wird eine Partikelfilterregeneration durch thermischen Rußabbrand bei einer Rußbeladung des Systemfilters 4 von mehreren Gramm Ruß, bezogen auf einen Liter Partikelfiltervolumen eingeleitet. Eine Ermittlung des entsprechenden Zeitpunkts kann modellbasiert durch das Steuergerät 7 erfolgen. Alternativ oder zusätzlich ist hierfür eine Auswertung der Signale des ersten und/oder dritten Drucksensors 5, 5''. Bei Erreichen einer Grenzbeladung bzw. eines Grenzwertes für den durch die Partikelbeladung verursachten Staudruck wird eine thermische Regeneration eingeleitet. Hierfür wird beispielsweise durch motorische Maßnahmen die Temperatur des Abgases bzw. des Systemfilters 4 derart angehoben, dass der im Systemfilter 4 angesammelter Ruß abbrennen kann. Typischerweise werden dabei im Systemfilter 4 Temperaturen von über 600 °C erreicht. Lokal können beispielsweise infolge der Wärmefreisetzung beim Rußabbrand auch Temperaturen von über 800 °C auftreten, was den Systemfilter 4 entsprechend stark thermisch beansprucht.

Obschon zur Absenkung der Rußabbrandtemperatur eine Kraftstoffadditivierung und/oder für den Systemfilter 4 eine katalytische Beschichtung vorgesehen sein können, kann es insbesondere bei der thermischen Regeneration zu einer Beschädigung des Systemfilters 4 kommen, welche sich beispielsweise durch Rissbildung oder Anschmelzungen äußern kann. Als Folge hiervon kann sich wiederum die Filterwirkung bzw. der Abscheidegrad des Systemfilters 4 mehr oder weniger stark vermindern. Mittels des erfindungsgemäß vorgesehenen Diagnosefilters 11 kann eine derartige Störung der Funktionsfähigkeit des Systemfilters 4 erkannt werden und außerdem eine erhöhte Abgabe von Partikeln an die Umgebung vermieden werden.

Das stromab des Systemfilters 4 angeordnete Diagnosefilter 11 wird von dem aus dem Systemfilter 4 ausströmenden Abgas durchströmt. Bei einem voll funktionsfähigen Systemfilter 4 ist der Partikelgehalt des gefilterten Abgases stark vermindert. Das Diagnosefilter 11 wird in diesem Fall nur gering mit Partikeln beaufschlagt und belädt sich dementsprechend nur langsam mit Partikeln. Bei einem Systemfilter 4, dessen Abscheidegrad vermindert ist, erfolgt jedoch eine raschere Beladung des Diagnosefilters 11. Da die Partikelbeladung des Diagnosefilters 11 beispielsweise durch Auswertung des vom dritten Drucksensor 5" erfassten Staudruck oder durch Ermittlung des Strömungswiderstands durch Auswertung der von den Drucksensoren 5', 5" gelieferten Signale ermittelt werden kann, ist eine Überwachung der Funktionsfähigkeit des Systemfilters 4 ermöglicht. Aufgrund der Filterwirkung des Diagnosefilters 11 wird zudem eine übermäßige Emission von Partikeln an die Umwelt auch bei einem schadhaften Systemfilter 4 vermieden.

Die Auslegung des Diagnosefilters 11 orientiert sich vorzugsweise an der Filterwirkung des Systemfilters 4. Bevorzugt ist das Diagnosefilter 11 derart ausgeführt, dass bei einem voll funktionsfähigen Systemfilter 4 nach einer vorgegebenen Grenzlaufstrecke des Fahrzeugs sein Strömungswiderstand, ermittelt bei einem mittleren Lastpunkt der Brennkraftmaschine 1, einen vorgegebenen Grenzwert unterschreitet. In einer bevorzugten Dimensionierung ist das Diagnosefilter 11 so ausgelegt, dass der Abgasgegendruck des Diagnosefilters 11 bei voll funktionsfähigem Partikelfilter 4 nach einer Grenzlaufstrecke von etwa 10.000 km einen Grenzwert von 200 mbar, besonders bevorzugt von 100 mbar unterschreitet.

Da das Diagnosefilter 11 bei intaktem Systemfilter 4 nur gering mit Partikeln beaufschlagt wird, kann es entsprechend klein ausgeführt sein. Vorzugsweise weist das Diagnosefilter 11 ein Einbauvolumen auf, welches 50 % des Systemfilters 4 unterschreitet. In einer besonders bevorzugten Ausführung beträgt das Einbauvolumen des Diagnosefilters 11 weniger als 30 % des Systemfilters 4. Die Partikelaufnahmefähigkeit des Diagnosefilters 11 beträgt dadurch typischerweise nur einen Bruchteil der Partikelaufnahmefähigkeit des Systemfilters 4. Das heißt, dass bei einer bestimmten Beladungsmenge das Diagnosefilter 11 einen deutlich stärkeren Anstieg des Strömungswiderstands erfährt, als das Systemfilter 4. Auf diese Weise wird die Nachweisempfindlichkeit des Diagnosefilters 11 hinsichtlich ausgefilterter Partikel infolge eines schadhaften Systemfilters 4 verbessert. Außerdem wird der Tatsache Rechnung getragen, dass das Diagnosefilter 11 nur bei einem Filterversagen des Systemfilters 4 größere Partikelmengen ausfiltern muss.

Die Auslegung des Diagnosefilters 11 kann auch entsprechend einer vorgegebenen Mindestfilterwirkung bei einem schadhaften oder wirkungslosen Systemfilters 4 gewählt sein. Es kann vorgesehen sein, dass das Diagnosefilter 11 auch bei einem beispielsweise in seiner Filterwirkung um 50 % verschlechterten Systemfilter 4 den Partikelgehalt des Abgases unter 100 mg je km Fahrstrecke oder je kWh Motorarbeit vermindern kann. Vorzugsweise ist eine Verminderung auf weniger als 25 mg, insbesondere auf weniger als 5 mg je km Fahrstrecke oder je kWh Motorarbeit ermöglicht. Dadurch ist auch bei einem schadhaften oder ausgefallenen Partikelfilter 4 eine geringe Partikelemission des entsprechenden Fahrzeugs sichergestellt.

Für einen empfindlichen Nachweis in Bezug auf vom Systemfilter 4 durchgelassene Partikel kann das Diagnosefilter 11 auch eine im Vergleich zum Systemfilter 4 verringerte Porosität aufweisen. Die Aufnahme einer bestimmten Partikelmenge verursacht so beim Diagnosefilter 11 im Vergleich zum Systemfilter 4 eine signifikante Erhöhung des Strömungswiderstands.

Um eine Funktionsüberwachung des Systemfilters 4 über einen langen Zeitraum sicherzustellen, ist es vorteilhaft, wenn das Diagnosefilter 11 derart im Abgasstrang 3 angeordnet ist, dass es bei einer thermischen Regeneration des Systemfilters 4 in Folge von Wärmeübertragung ebenfalls auf eine über der Rußabbrandtemperatur liegende Temperatur aufgeheizt wird. Bei einer Regeneration des Systemfilters 4 wird das Diagnosefilter 11 somit ohne Ergreifen zusätzlicher Aufheizmaßnahmen ausreichend aufgeheizt, um während des Regenerationsvorgangsvorgangs für das Systemfilter 4 selbsttätig ebenfalls regeneriert und von abgelagertem Ruß befreit zu werden zu werden. Dadurch kann das Diagnosefilter 11 zudem bei einem geschädigten Systemfilter 4 über längere Zeit den Wirkungsverlust des Systemfilters 4 ausgleichen. Wahlweise kann das Diagnosefilters 11 hauptsächlich auf eine solche Redundanzwirkung oder schwerpunktmäßig auf eine Diagnosewirkung ausgelegt sein. Im ersten Fall ist ein etwa ebenso groß wie das Systemfilter 4 ausgeführtes Diagnosefilter 11 mit einer ähnlich hohen Partikelaufnahmefähigkeit vorteilhaft. Ist eine empfindliche Diagnose des Systemfilters 4 vorrangig, so ist eine kleinere Ausführung bzw. eine geringere Partikelaufnahmefähigkeit vorteilhaft.

Um sicherzustellen, dass das Diagnosefilter 11 im Zuge einer zwangsweise herbeigeführten thermischen Regeneration durch sauerstoffinduzierten Rußabbrand des Systemfilters 4 selbsttätig ebenfalls regeneriert wird, ist vorgesehen, das Diagnosefilter 11 vergleichsweise nahe hinter dem Systemfilter 4 anzuordnen. Bei der in Fig. 1 dargestellten Ausführungsform ist dies durch Anordnung in dem für beide Partikelfilterelemente 4, 11 gemeinsamen Gehäuse gewährleistet. Der Abstand in Abgasströmungsrichtung beträgt vorzugsweise wenige Zentimeter, so dass in den Zwischenraum hinein ragende Sensoren Platz finden. Gegebenenfalls kann unter Verzicht auf diese Sensoren der Diagnosefilter 11 auch bündig oder annähernd mit Berührkontakt hinter dem Systemfilter 4 angeordnet sein. Auf diese Weise ist eine besonders gute Wärmeübertragung durch Konvektion und/oder Strahlung vom Systemfilter 4 auf das Diagnosefilter 11 unter Verzicht auf unerwünschte Wärmeverluste ermöglicht.

Die vom Systemfilter 4 bei dessen Regeneration auf das Diagnosefilter 11 übertragene Wärmemenge kann auch dann für eine selbsttätige Regenration des Diagnosefilters ausreichen, wenn das Diagnosefilter 11 in einem separaten Gehäuse, jedoch nahe genug hinter dem Gehäuse des Systemfilters 4 angeordnet ist. In Fig. 2 ist eine solche Anordnung schematisch dargestellt. Dabei sind im Vergleich zu der in Fig. 1 dargestellten Anordnung funktionsgleiche Bauteile mit denselben Bezugszeichen versehen. Die Anordnung des Diagnosefilters 11 in einem separaten Gehäuse 9' kann insbesondere Vorteile hinsichtlich der zur Verfügung stehenden Einbauverhältnisse aber auch Fertigungsvorteile und Vorteile hinsichtlich der Wartung aufweisen. Ein weiterer Vorteil ist Möglichkeit einer zuverlässigeren Ermittlung der bei einer Regeneration im Diagnosefilter 11 infolge des Rußabbrands frei werdenden Wärme bzw. einer daraus resultierenden Temperaturerhöhung. Diese kann durch eine nicht gesondert dargestellte Anordnung von Temperatursensoren eingangs- und ausgangsseitig des Diagnosefilters 11 erfasst und in Bezug auf die abgebrannte Rußmenge ausgewertet werden. Dabei wird mit der gewählten Anordnung des Diagnosefilters gemäß Fig. 2 die Temperaturmessung weniger stark von den in unmittelbarer Umgebung des Systemfilters vorhandenen thermischen Verhältnissen beeinflusst.

Mit der Erfassung der bei einer Regeneration im Diagnosefilter 11.frei werdenden Wärmemenge mittels eines oder mehrerer geeignet angebrachter Temperatursensoren kann eine seit der letzten vorausgegangenen erfolgreichen thermischen Regeneration angesammelte Rußmenge vom Steuergerät 7 errechnet werden. Das Ergebnis lässt sich wiederum mit einem Abscheidegrad und damit mit der Funktionsfähigkeit des Systemfilters 4 in Bezug setzen. Durch eine Erfassung der bei einer Regeneration des Diagnosefilters 11 frei werdenden Wärme kann daher die Funktionsfähigkeit des Systemfilters 4 bewertet werden. Da im Normalfall bei intaktem Systemfilter 4 zwischen zwei Regenerationsvorgängen nur geringe Rußmengen im Diagnosefilter 11 angesammelt werden, ist die Wärmefreisetzung bzw. Temperaturerhöhung bei dessen Abbrand meist sehr gering oder vernachlässigbar. Folglich ist eine daraus resultierende Temperaturbelastung des Diagnosefilters 11 meist ebenfalls gering, insbesondere bei einer Anordnung in einem separaten Gehäuse. Aus diesem Grund kann vorgesehen sein, das Diagnosefilter 11 aus einem weniger temperaturbeständigen und damit kostengünstigeren Material, beispielsweise Cordierit, auszuführen. Demgegenüber ist es vorteilhaft, für das Systemfilter 4 ein hochtemperaturfestes Material wie SiC zu wählen.

Wie erläutert, erfolgt erfindungsgemäß eine Überwachung der Funktionsfähigkeit des Systemfilters 4 durch eine Erfassung der Partikelbeladung des Diagnosefilters 11. Dies kann beispielsweise mittels eines elektrischen Sensors erfolgen, der ein mit der Partikelbeladung korrelierendes Signal erzeugt. Vorzugsweise wird zur Erfassung der Partikelbeladung des Diagnosefilters 11 jedoch das Signal des dritten Drucksensors 5'' und/oder des zweiten Drucksensors 5' vom Steuergerät 7 ausgewertet. Vorteilhaft ist es in diesem Zusammenhang, die bei vorgegebenen Motorbetriebspunkten vorliegenden Signale auszuwerten. Vorteilhaft ist insbesondere eine Auswertung der Sensorsignale in Bezug auf eine Zeitspanne seit der letzten erfolgreich verlaufenen thermischen Regeneration. Es kann jedoch auch eine kontinuierliche oder quäsi-kontinuierliche Auswertung vorgesehen sein, bei welcher unter Berücksichtigung des dem Steuergerät 7 bekannten Abgasmassenstroms und der Abgastemperatur ein mit der Partikelbeladung korrelierender Strömungswiderstandswert des Diagnosefilters 11 ermittelt wird. Es kann jedoch auch eine Ermittlung aus anderen Größen vorgesehen sein, welche von der Partikelbeladung des Diagnosefilters 11 beeinflusst sind. Beispielsweise kann das Signal einer Lambdasonde oder ein in einer Abgasrückführung erfasster Druckwert hierfür herangezogen werden.

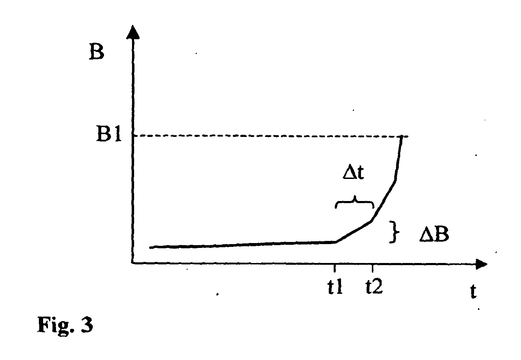

Nachfolgend wird anhand eines in Fig. 3 dargestellten Zeitdiagramms eine vorteilhafte Vorgehensweise bei der Funktionsüberwachung des Systemfilters 4 erläutert. Im Diagramm der Fig. 3 ist hierfür ein beispielhafter Verlauf der ermittelten Partikelbeladung B des Diagnosefilters 11 in Abhängigkeit von der Zeit t dargestellt. Zur Beurteilung der Funktionsfähigkeit des Systemfilters 4 wird bevorzugt der Absolutwert der erfassten Partikelbeladung B und/oder deren zeitlicher Anstieg □B/□t ausgewertet. Wie aus dem Kurvenverlauf ersichtlich, steigt die Partikelbeladung B bis zum Zeitpunkt t1 lediglich in geringem Maß an und weist zudem niedrige Werte auf. Die Funktion des Systemfilters 4 wird in diesem Fall als ordnungsgemäß bewertet. Ab dem Zeitpunkt t1 ergibt sich ein stärkerer zeitlicher Anstieg □B/□t der Partikelbeladung B, was auf einen verminderten Abscheidegrad des Systemfilters 4 zurückgeführt werden kann. Vorzugsweise wird der ermittelte Anstieg □B/□t mit einem vorgegebenen Grenzwert verglichen und bei einem Überschreiten des Grenzwerts eine Fehlermeldung betreffend einer Fehlfunktion des Systemfilters 4 ausgegeben. Zusätzlich oder alternativ kann eine Fehlermeldung ausgegeben werden, wenn der Absolutwert der Partikelbeladung B einen Schwellenwert B1 erreicht bzw. überschreitet. Selbstverständlich kann die analoge Vorgehensweise auch für eine mit der Partikelbeladung B des Diagnosefilters 11 korrelierende Größe vorgesehen sein. Insbesondere ist es vorteilhaft, wie oben beschrieben eine bei einer Regeneration ermittelte Temperaturerhöhung über dem Diagnosefilter 11 in analoger Weise auszuwerten. Dabei werden vorzugsweise die ermittelten Temperaturerhöhungen mit einem vorgebbaren Schwellenwert verglichen.

## Patentansprüche

1. Abgasreinigungsanlage für eine Brennkraftmaschine eines Kraftfahrzeugs, umfassend ein erstes Partikelfilterelement (4) und ein zweites Partikelfilterelement (11), welches dem ersten Partikelfilterelement (4) nachgeschaltet ist und von dem aus dem ersten Partikelfilterelement (4) ausströmenden Abgas durchströmt wird,
**dadurch gekennzeichnet, dass**
für die Abgasreinigungsanlage Beladungserfassungsmittel vorgesehen sind, welche eine mit einer Partikelbeladung des zweiten Partikelfilterelements (11) korrelierende Größe bereitstellen und der Abgasreinigungsanlage eine Auswerteeinheit (7) zugeordnet ist, welche die von den Beladungserfassungsmitteln bereitgestellte Größe in Bezug auf eine Abscheidewirkung des ersten Partikelfilterelements (4) auswertet.

2. Abgasreinigungsanlage nach Anspruch 1,
**dadurch gekennzeichnet, dass**
das zweite Partikelfilterelement (11) derart in der Abgasreinigungsanlage angeordnet ist, dass eine Wärmeübertragung vom ersten Partikelfilterelement (4) auf das zweite Partikelfilterelement (11) erfolgen kann, wobei die bei einer thermischen Regeneration des ersten Partikelfilterelements (4) auf das zweite Partikelfilterelement (11) übertragene Wärmemenge ausreicht, um das zweite Partikelfilterelement (11) auf eine für einen Abbrand von abgelagertem Ruß erforderliche Temperatur aufzuheizen.

3. Abgasreinigungsanlage nach Anspruch 1 oder 2,
**dadurch gekennzeichnet, dass**
die Partikelaufnahmefähigkeit des ersten Partikelfilterelements (4) ein Mehrfaches der Partikelaufnahmefähigkeit des zweiten Partikelfilterelements (11) beträgt.

4. Abgasreinigungsanlage nach einem der Ansprüche 1 bis 3,
**dadurch gekennzeichnet, dass**
das erste und das zweite Partikelfilterelement (4; 11) derart ausgelegt sind, dass eine Aufnahme einer bestimmten Partikelmenge beim zweiten Partikelfilterelement (11) eine im Vergleich zum ersten Partikelfilterelement signifikant erhöhte Zunahme des Strömungswiderstands verursacht.

5. Abgasreinigungsanlage nach einem der Ansprüche 1 bis 4,
**dadurch gekennzeichnet, dass**
die Beladungserfassungsmittel Staudruckerfassungsmittel oder Strömungswiderstandserfassungsmittel umfassen.

6. Abgasreinigungsanlage nach einem der Ansprüche 1 bis 4,
**dadurch gekennzeichnet, dass**
die Beladungserfassungsmiltel Temperaturerfassungsmittel umfassen.

7. Abgasreinigungsanlage nach einem der Ansprüche 1 bis 6,
**dadurch gekennzeichnet, dass**
das zweite Partikelfilterelement (11) eine gegenüber dem ersten Partikelfilterelement (4) verringerte Porosität aufweist.

8. Abgasreinigungsanlage nach einem der Ansprüche 1 bis 7,
**dadurch gekennzeichnet, dass**
das erste Partikelfilterelement (4) einen Abscheidegrad von über 95 % bezogen auf die Partikelmasse aufweist.

9. Abgasreinigungsanlage nach einem der Ansprüche 1 bis 8,
**dadurch gekennzeichnet, dass**
das erste Partikelfilterelement (4) derart ausgelegt ist, dass der Partikelgehalt des Abgases auf weniger als 5 mg je km Fahrstrecke oder je kWh Motorarbeit vermindert werden kann.

10. Abgasreinigungsanlage nach einem der Ansprüche 1 bis 9,
**dadurch gekennzeichnet, dass**
das zweite Partikelfilterelement (11) so ausgelegt ist, dass der Abgasgegendruck des zweiten Partikelfilterelements (11) bei voll erstem Partikelfilterelement (4) nach einer Grenzlaufstrecke von etwa 10.000 km einen Grenzwert von 200 mbar bei einem mittleren Lastpunkt der Brennkraftmaschine (1) unterschreitet.

11. Abgasreinigungsanlage nach einem der Ansprüche 1 bis 10,
**dadurch gekennzeichnet, dass**
das zweite Partikelfilterelement (11) so ausgelegt ist, dass es bei einem in seiner Filterwirkung um 50 % verschlechterten erstem Partikelfilterelement (4) den Partikelgehalt des Abgases auf weniger als 5 mg je km Fahrstrecke oder je kWh Motorarbeit vermindern kann.

12. Abgasreinigungsanlage nach einem der Ansprüche 1 bis 11,
**dadurch gekennzeichnet, dass**
das erste und das zweite Partikelfilterelement (4; 11) zusammen in einem gemeinsamen Gehäuse (9) angeordnet sind.

13. Abgasreinigungsanlage nach einem der Ansprüche 1 bis 12,
**dadurch gekennzeichnet, dass**
für das erste Partikelfilterelement (4) eine katalytische Beschichtung vorgesehen ist.

14. Abgasreinigungsanlage nach einem der Ansprüche 1 bis 13,
**dadurch gekennzeichnet, dass**
stromauf des ersten Partikelfilterelements (4) ein Oxidationskatalysator vorgesehen ist.

15. Abgasreinigungsanlage nach einem der Ansprüche 1 bis 13,
**dadurch gekennzeichnet, dass**
stromab des zweiten Partikelfilterelements (11) ein Stickoxidreinigungskatalysator angeordnet ist.

## Claims

1. Exhaust gas purification system for an internal combustion engine of a motor vehicle, comprising a first particulate filter element (4) and a second particulate filter element (11) downstream of the first particulate filter element (4), through which the exhaust gas discharged from the first particulate filter element (4) passes,
**characterised in that**
the exhaust gas purification system is provided with loading detection means providing a variable correlating with a particulate loading of the second particulate filter element (11), and **in that** an evaluation unit (7) evaluating the variable provided by the loading detection means with respect to a removal effect of the first particulate filter element (4) is assigned to the exhaust gas purification system.

2. Exhaust gas purification system according to claim 1,
**characterised in that**
the second particulate filter element (11) is arranged in the exhaust gas purification system such that heat can be transferred from the first particulate filter element (4) to the second particulate filter element (11), wherein the heat quantity transferred to the second particulate filter element (11) during a thermal regeneration of the first particulate filter element (4) is sufficient to heat the second particulate filter element (11) to a temperature required for burning off any deposited particulate.

3. Exhaust gas purification system according to claim 1 or 2,
**characterised in that**
the particulate capacity of the first particulate filter element (4) is a multiple of the particulate capacity of the second particulate filter element (11).

4. Exhaust gas purification system according to any of claims 1 to 3,
**characterised in that**
the first and second particulate filter elements (4; 11) are designed such that an absorption of a defined particulate quantity at the second particulate filter element (11) causes an increase in flow resistance which is significantly higher than in the first particulate filter element.

5. Exhaust gas purification system according to any of claims 1 to 4,
**characterised in that**
the loading detection means comprise backpressure detection means or flow resistance detection means.

6. Exhaust gas purification system according to any of claims 1 to 4,
**characterised in that**
the loading detection means comprise temperature detection means.

7. Exhaust gas purification system according to any of claims 1 to 6,
**characterised in that**
the second particulate filter element (11) has a lower porosity than the first particulate filter element (4).

8. Exhaust gas purification system according to any of claims 1 to 7,
**characterised in that**
the first particulate filter element (4) has a removal rate of more than 95% with respect to particulate mass.

9. Exhaust gas purification system according to any of claims 1 to 8,
**characterised in that**
the first particulate filter element (4) is designed such that the particulate content of the exhaust gases can be reduced to less than 5 mg per km travelling distance or per kWh engine work.

10. Exhaust gas purification system according to any of claims 1 to 9,
**characterised in that**
the second particulate filter element (11) is designed such that the exhaust gas backpressure of the second particulate filter element (11) falls below a limit value of 200 mbar at a medium load point of the internal combustion engine (1) after a limit travelling distance of approximately 10 000 km if the first particulate filter element (4) is full.

11. Exhaust gas purification system according to any of claims 1 to 10,
**characterised in that**
the second particulate filter element (11) is designed such that it can reduce the particulate content of the exhaust gas to less than 5 mg per km travelling distance or per kWh engine word if the filtering effect of the first particulate filter element (4) is reduced by 50%.

12. Exhaust gas purification system according to any of claims 1 to 11,
**characterised in that**
the first and second particulate filter elements (4; 11) are located in a common housing (9).

13. Exhaust gas purification system according to any of claims 1 to 12,
**characterised in that**
a catalytic coating is provided for the first particulate filter element (4).

14. Exhaust gas purification system according to any of claims 1 to 13,
**characterised in that**
an oxidising catalyst is provided upstream of the first particulate filter element (4).

15. Exhaust gas purification system according to any of claims 1 to 13,
**characterised in that**
a nitrogen oxide purification catalyst is provided downstream of the second particulate filter element (11).

## Revendications

1. Système d'épuration des gaz d'échappement pour un moteur à combustion interne d'un véhicule automobile, comprenant un premier élément (4) filtrant pour particules et un second élément (11) filtrant pour particules qui est placé en aval du premier élément (4) filtrant pour particules et est parcouru par les gaz d'échappement sortant du premier élément (4) filtrant pour particules, **caractérisée en ce que** sont prévus pour le système d'épuration des gaz d'échappement des moyens de détection de charge qui mettent à disposition une dimension en corrélation avec une charge particulaire du second élément (11) filtrant pour particules et **en ce qu'**une unité d'évaluation est associée au système d'épuration des gaz d'échappement, laquelle évalue la dimension mise à disposition par les moyens de détection de charge par rapport à un effet de séparation du premier élément (4) filtrant pour particules.

2. Système d'épuration des gaz d'échappement selon la revendication 1, **caractérisée en ce que** le second élément (11) filtrant pour particules est disposé de telle sorte dans le système d'épuration des gaz d'échappement qu'une transmission de chaleur entre le premier élément (4) filtrant pour particules et le second élément (11) filtrant pour particules puisse s'effectuer, la quantité de chaleur transmise lors d'une régénération thermique du premier élément (4) filtrant pour particules au second élément (11) filtrant pour particules est suffisante pour chauffer le second élément (11) filtrant pour particules à une température nécessaire pour brûler la suie accumulée.

3. Système d'épuration des gaz d'échappement selon la revendication 1 ou 2, **caractérisée en ce que** la capacité de contenance de particules du premier élément (4) filtrant pour particules est un multiple de la capacité de contenance de particules du second élément (11) filtrant pour particules.

4. Système d'épuration des gaz d'échappement selon l'une quelconque des revendications 1 à 3, **caractérisé en ce que** les premier et second éléments (4, 11) filtrant pour particules sont disposés de manière telle qu'une réception d'une quantité définie de particules par le second élément (11) filtrant pour particules provoque une augmentation considérablement accrue de la résistance à l'écoulement par rapport au premier élément filtrant pour particules.

5. Système d'épuration des gaz d'échappement selon l'une quelconque des revendications 1 à 4, **caractérisé en ce que** les moyens de détection de charge comprennent des moyens de détection de pression dynamique ou des moyens de détection de la résistance à l'écoulement.

6. Système d'épuration des gaz d'échappement selon l'une quelconque des revendications 1 à 4, **caractérisé en ce que** les moyens de détection de charge comprennent des moyens de détection de température.

7. Système d'épuration des gaz d'échappement selon l'une quelconque des revendications 1 à 6, **caractérisé en ce que** le second élément (11) filtrant pour particules présente une porosité réduite par rapport au premier élément (4) filtrant pour particules,

8. Système d'épuration des gaz d'échappement selon l'une quelconque des revendications 1 à 7, **caractérisé en ce que** le premier élément (4) filtrant pour particules présente un degré de séparation de plus de 95 % par rapport à la masse de particules.

9. Système d'épuration des gaz d'échappement selon l'une quelconque des revendications 1 à 8, **caractérisé en ce que** le premier élément (4) filtrant pour particules est disposé de manière telle que la teneur en particules des gaz d'échappement puisse être réduite de moins de 5 mg par kilomètre parcouru ou pour chaque travail du moteur en kWh.

10. Système d'épuration des gaz d'échappement selon l'une quelconque des revendications 1 à 9, **caractérisé en ce que** le second élément (11) filtrant pour particules est disposé de manière telle que la contre-pression des gaz d'échappement du second élément (11) filtrant pour particules soit inférieure à une valeur limite de 200 mbar après un parcours limité d'environ 10 000 km à un point d'application de la charge moyen du moteur (1) à combustion interne, en présence d'un premier élément (4) filtrant pour particules.

11. Système d'épuration des gaz d'échappement selon l'une quelconque des revendications 1 à 10, **caractérisé en ce que** le second élément (11) filtrant pour particules est disposé de manière telle qu'il puisse réduire la teneur en particules des gaz d'échappement de moins de 5 mg par kilomètre parcourus ou par travail de moteur en kWh, en présence d'un premier élément (4) filtrant pour particules dont l'effet de filtration est altérée de 50 %.

12. Système d'épuration des gaz d'échappement selon l'une quelconque des revendications 1 à 11, **caractérisé en ce que** le premier et le second éléments (4, 11) filtrant pour particules sont réunis dans un boîtier commun (9).

13. Système d'épuration des gaz d'échappement selon l'une quelconque des revendications 1 à 12, **caractérisé en ce que** un revêtement catalytique est prévu pour le premier élément (4) filtrant pour particules.

14. Système d'épuration des gaz d'échappement selon l'une quelconque des revendications 1 à 13, **caractérisé en ce qu'**en amont du premier élément (4) filtrant pour particules est prévu un catalyseur d'oxydation.

15. Système d'épuration des gaz d'échappement selon l'une quelconque des revendications 1 à 13, **caractérisé en ce qu'**en aval du second élément (11) filtrant pour particules est prévu un catalyseur de purification d'oxyde d'azote.
